# EUROPÄISCHE PATENTSCHRIFT

(11) **EP 3 579 624 B1**
(45) Veröffentlichungstag und Bekanntmachung des Hinweises auf die Patenterteilung: **28.06.2023**
(21) Anmeldenummer: 19176418.2
(22) Anmeldetag: 24.05.2019
(51) Int. Cl.: H04B 7/185, H04L 7/00, H04Q 9/00

(54) **VERFAHREN ZUM BETRIEB EINES FUNKÜBERTRAGUNGSSYSTEMS SOWIE ANORDNUNG EINES FUNKÜBERTRAGUNGSSYSTEMS**
METHOD FOR OPERATING A WIRELESS TRANSMISSION SYSTEM, AND ARRANGEMENT OF A WIRELESS TRANSMISSION SYSTEM
PROCÉDÉ DE FONCTIONNEMENT D'UN SYSTÈME DE TRANSMISSION RADIO AINSI QU'AGENCEMENT D'UN SYSTÈME DE TRANSMISSION RADIO

(30) Priorität: 08.06.2018 DE 102018004567; 19.06.2018 DE 102018004815
(43) Veröffentlichungstag der Anmeldung: 11.12.2019
(60) Teilanmeldung: 23152320.0
(73) Patentinhaber: Diehl Metering Systems GmbH, 90451 Nürnberg (DE)
(72) Erfinder: MZYK, Raphael, 91126 Kammerstein (DE); PETKOV, Hristo, 90425 Nürnberg (DE); KAUPPERT, Thomas, 90455 Nürnberg (DE); GOTTSCHALK, Klaus, 90610 Winkelhaid (DE)
(74) Vertreter: Diehl Patentabteilung

(56) Entgegenhaltungen:
- EP-A2- 3 211 847
- EP-B1- 1 791 100
- EP-B1- 3 211 847
- WO-A1-2016/189995
- DE-A1-102011 082 098

## Beschreibung

Die Erfindung betrifft ein Verfahren zum Betrieb eines Funkübertragungssystems, mit den Merkmalen des Oberbegriffs des Anspruchs 1, 2 und 3. Ferner betrifft die vorliegende Erfindung Anordnung eines Funkübertragungssystems gemäß dem Oberbegriff des Anspruchs 16.

### Technologischer Hintergrund

Intelligente Verbrauchsmessgeräte, auch Verbrauchsmesser oder Smart Meter genannt, sind in ein Versorgungsnetz eingebundene Verbrauchsmessgeräte z. B. für Wärme bzw. Energie, Strom, Gas, Wasser, die dem jeweiligen Anschlussbenutzer den tatsächlichen Verbrauch anzeigen und in ein Kommunikationsnetz eingebunden sind. Intelligente Verbrauchsmessgeräte haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können Versorgungsnetze wesentlich besser ausgelastet werden.

Intelligente Verbrauchsmessgeräte sind üblicherweise jeweils Wohneinheiten oder Wohnhäusern zugeordnet. Die dort anfallenden Messdaten können auf unterschiedlichste Weise ausgelesen werden. Beispielsweise können Messdaten per Mobilfunktechnologie in Form von Datenpaketen oder Telegrammen übertragen werden. Dies ist allerdings teuer, setzt die Installation von Mobilfunkmodulen an den Verbrauchsmessgeräten voraus und hat Nachteile bezüglich des hohen Stromverbrauchs an den einzelnen Verbrauchsmessgeräten. Ferner können Messdaten in Form von Datenpaketen oder Telegrammen auch per Funk, beispielsweise im ISM (Industrial, Scientific, Medical)-Band-Frequenzbereich oder im SRD (Short Range Devices)-Band-Frequenzbereich, übertragen werden. Diese Frequenzbereiche haben den Vorteil, dass von den Betreibern lediglich eine allgemeine Zulassung der Frequenzverwaltung notwendig ist. Allerdings besteht das Problem, dass aufgrund der Häufigkeit der Verwendung derartiger Frequenzbereiche für unterschiedlichste technische Einrichtungen wie etwa Garagentorsteuerungen, Babyphones, Alarmanlagen, WLAN, Bluetooth, Rauchwarnmelder usw. es häufig zu Störungen kommen kann. Das Sammeln der Messdaten per Funk erfolgt entweder durch ortsfeste oder mobile Datensammler (Kollektoren) bzw. Basisstationen, an die die in den Sendern der Verbrauchsmessgeräte bereitgestellten Messdaten übertragen werden.

Aus rechtlichen Gründen dürfen von den Sendern der Verbrauchsmessgeräte lediglich Messdaten, die zu bestimmten, sehr kurzen Stichzeiträumen (Stichzeit bzw. Stichzeitpunkt inklusive Zeitabweichung) an den Datensammler übertragen werden, für die Verbrauchsauswertung herangezogen werden. Während dieser sehr kurzen Stichzeiträume übertragen die Sender aller Verbrauchsmessgeräte ihre Datenpakete an den Empfänger des Datensammlers. Außerhalb der Stichzeiträume empfangene Datenpakete werden verworfen. Hierbei kommt es durchaus häufig vor, dass sich die Übertragungen von Messdaten von Sendern unterschiedlicher Verbrauchsmessgeräte innerhalb des Stichzeitraums gegenseitig stören. Auch gebäudespezifische Besonderheiten können oftmals dazu führen, dass die Übertragung der Messdaten von den Verbrauchsmessgeräten zur Basisstation bzw. zum Datensammler gestört ist. Alle diese Faktoren führen dazu, dass nur eine mäßige Wahrscheinlichkeit besteht, dass die Datenpakete in dem betreffenden Kanal durchkommen.

Funkkommunikation über sehr große Reichweiten setzen unter anderem hochempfindliche Empfängersysteme voraus. Eine weitere Schwierigkeit besteht darin, dass Kommunikationssysteme mit Funkübertragung zwischen Datensammler und Verbrauchsmessgeräten eine sehr genaue Zeitsynchronisation zwischen den im Bereich der Verbrauchsmessgeräte befindlichen Kommunikationsmodulen und demjenigen des Datensammlers benötigen.

Damit gehen schmalbandige Übertragungskanäle einher, welche bestimmte Anforderungen an die Genauigkeit in der Frequenz und in der Zeitbestimmung der beteiligten Geräte stellen. Um die Funkkommunikation weniger störanfällig zu machen und damit die Robustheit des Systems zu erhöhen, werden beispielsweise die Funktelegramme in kleine Subpakete partitioniert, wie es in der DE 10 2011 082 098 B4 gezeigt ist. Diese Subpakete werden anschließend zu unterschiedlichen Zeitpunkten auf unterschiedlichen Frequenzen versendet. Diese Art der Übertragung fällt unter den Bereich Frequenzsprungverfahren bzw. Frequenzspreizverfahren.

Die verwendeten Trägerfrequenzen, Sendezeitpunkte, sowie Abtastraten leiten sich in solchen Funkübertragungssystem typischerweise von Hochfrequenz-Quarzen bzw. Hochfrequenz-Quarzoszillatoren ab. Die zeitlichen Ereignisse leiten sich von Schwingquarzen, wie beispielsweise Zeitquarzen bzw. Uhrenquarzen ab. Bei der Kommunikation, wie beispielsweise in einem Verbrauchsdatenerfassungssystem bzw. Metering Funknetzwerk bestimmen daher fertigungsbedingte Toleranzen der verwendeten Quarze Abweichungen innerhalb der Frequenz und Zeit zwischen Basisstation bzw. Datensammler und Endgerät bzw. Verbrauchszähler. Dies kann wiederum zu degradierenden Effekten wie zu einer reduzierten Reichweite oder im schlimmsten Fall zum Abbruch der Kommunikation. Zudem stellt das Aussenden von Subpaketen über zeitlich versetzte Teilpakete sehr hohe Anforderungen an die Übereinstimmung zwischen den Abtastraten von Sender und Empfänger, da über einen langen Zeitraum zeitlich sehr exakt abgetastet werden muss. Eine unterschiedliche schnelle Abtastrate zwischen Sender und Empfänger kann ebenfalls zu einer Degradierung der Kommunikation oder zum Abbruch führen.

Gerade im Bereich der Kommunikationsmodule autonomer Verbrauchsmessgeräte werden als Frequenzreferenzeinrichtungen einfache Quarze mit geringem Stromverbrauch eingesetzt. Derartige Quarze weisen aufgrund von Fertigungstoleranzen, Temperaturverhalten und Alterung Quarzfehler von 10 - 100 ppm auf. Beispielsweise führt bei einem Standartquarz ein Quarzfehler von 50 ppm zu einer Abweichung von 4,3 Sekunden pro Tag bzw. 26 Minuten pro Jahr.

### Nächstliegender Stand der Technik

Die EP 3 211 847 A2 offenbart ein Verfahren zur Frequenzkorrektur eines Oszillators eines Sensorknotens eines Sensornetzwerkes. Hierbei wird ein Sendesignal eines Senders mit einer Modulation nach dem orthogonalen Frequenzmultiplexverfahren empfangen und die Frequenzabweichung des Oszillators bestimmt. Hieraus wird ein Korrektursignal zur Korrektur der Frequenzabweichung des Oszillators bestimmt und die Frequenz des Oszillators mit dem Korrektursignal korrigiert.

In der WO 2016/189995 A1 wird ein Kommunikationssystem, ein intelligenter Verbrauchszähler, ein Gateway-Gerät und ein Kommunikationsprogramm offenbart, mit dem die Kommunikation zwischen dem Gateway-Gerät, das aus Gründen der Energieeinsparung nicht immer in Betrieb ist, und dem intelligenten Zähler, der immer in Betrieb ist, sichergestellt werden kann. Es werden Synchronisationssteuereinheiten beschrieben, die zum Einrichten und Aufrechterhalten der Synchronisation durch Senden und Empfangen von Synchronisationssignalen und Synchronisationsbestätigungssignalen zwischen der Gateway-Vorrichtung und dem intelligenten Verbrauchszähler vorgesehen sind.

Die EP 1 791 100 B1 beschreibt ein Funkübertragungssystem mit kompensierter Senderfrequenzstabilität und entsprechendem Funkempfangsfrequenz-Suchlauf. Das Funkübertragungssystem umfasst mindestens einen Funksender sowie mindestens einen Funkempfänger. Ferner umfasst der Funksender einen Zeitgeber mit Zeitmessmitteln und einen Trägerfrequenzgeber, wobei die vom Zeitgeber vorgegebene Zeit von der Frequenz des Trägerfrequenzgebers abhängig ist. Der Funkempfänger sucht in einem Frequenz-Suchlauf mit abnehmender Funkempfangsfrequenz, um die Funkempfangsfrequenz des Funkempfängers auf die Funksendefrequenz des Funksenders abzustimmen. Der Funksender befindet sich allerdings im Endgerät bzw. Verbrauchszähler und der Funkempfänger in einer Basisstation bzw. einem Datensammler. Eine Fehlerkompensation findet somit in der Basisstation und nicht in einem Verbrauchszähler, insbesondere nicht in einem energieautarken Verbrauchszähler statt.

### Aufgabe der vorliegenden Erfindung

Die Aufgabe der vorliegenden Erfindung besteht darin, ein neuartiges Verfahren zum Betrieb eines Funkübertragungssystems sowie eine neuartige Anordnung zur Verfügung zu stellen, mit dem die Übertragungsqualität erhöht wird bei gleichzeitig erhöhter Kosteneffizienz und Energieeffizienz.

### Lösung der Aufgabe

Die vorstehende Aufgabe wird durch die gesamte Lehre des Anspruchs 1, des Anspruchs 2 und Anspruchs 3 sowie durch eine Anordnung gemäß Anspruch 16 gelöst. Zweckmäßige Ausgestaltungen der Erfindung sind in den Unteransprüchen beansprucht.

Erfindungsgemäß ist ein Verfahren zum Betrieb eines Funkübertragungssystems vorgesehen mit einem Funksender und mindestens einem Funkempfänger, wobei der Funksender mindestens einen Sender-Zeitgeber, insbesondere einen Taktgeber, umfasst, und zur Übertragung von Daten ein Paket und/oder ein Teilpaket und/oder eine Mehrzahl an Paketen nacheinander sendet, wobei die Trägerfrequenz und die Sendezeitpunkte der Daten oder die Trägerfrequenz und die Abtastrate der Daten vom Sender-Zeitgeber, insbesondere von einem Taktgeber, abhängen, und der Funkempfänger mindestens einen Empfänger-Zeitgeber, insbesondere einen Taktgeber, mit Zeitmessmitteln zur Bestimmung von Sendezeitpunkten und/oder zur Bestimmung von Trägerfrequenzen und/oder zur Bestimmung von vom Sender-Zeitgeber abhängige Abtrastraten oder zur Bestimmung von Quarzfrequenzen umfasst, wobei der Funkempfänger aufgrund der empfangenen Daten einen Trägerfrequenzfehler oder einen Abtastratenfehler oder einen Fehler im Sendezeitpunkt oder eine Quarztoleranz abschätzt und daraus einen Zeitfehler ermittelt, wobei auf Basis des Zeitfehlers ein zeitlicher Korrekturfaktor zur Kompensation bestimmt wird.

Besonders zweckmäßig ist es, wenn die Trägerfrequenz und die Sendezeitpunkte der Daten und/oder die Trägerfrequenz und die Abtastrate der Daten und/oder die Sendezeitpunkte der Daten und die Abtastrate der Daten von demselben Taktgeber abhängen. Vorteilhafterweise können somit Abweichungen in der Frequenz und/oder der Zeitbestimmung und/oder in der Abtastrate zwischen einem Funksender und einem Funkempfänger kompensiert werden. Es ist damit eine Möglichkeit geschaffen, um degradierende Effekte, wie z. B. eine reduzierte Funkreichweite oder einen Abbruch der Kommunikation, zu verhindern. Die Kompensation der Abweichungen kann vorteilhafterweise im Funkempfänger durchgeführt werden.

Zweckmäßigerweise besteht die Möglichkeit, dass der Funkempfänger energieautark ist. Somit ist ein weiterer Vorteil des Verfahrens, dass dieses auf einem energieautarken Funkempfänger durchgeführt werden kann, ohne eine zusätzliche Anforderung an den Energiebedarf des Funkempfängers zu stellen.

In einer ersten erfindungsgemäßen Ausgestaltung sendet der Funksender ein Paket zerstückelt als Teilpakete, indem mindestens zwei Pausen innerhalb des Pakets eingelegt werden, wobei die Pausen aus demselben Sender-Zeitgeber generiert werden, aus dem die Trägerfrequenz generiert wird. Dies hat den Vorteil, dass beispielsweise vorhandene Übertragungsbandbreiten effektiv ausgenutzt werden können.

In einer ersten Ausgestaltung der Erfindung schalten sich der Funkempfänger oder der Funkempfänger und der Funksender in den Pausen des Pakets ab, gehen insbesondere in einen Sleep-Modus, um Energie zu sparen und das Aufwachen wird unter anderem durch den zeitlichen Korrekturfaktor bestimmt. In einer zweiten Ausgestaltung der Erfindung schalten sich der Funkempfänger oder der Funkempfänger und der Funksender zwischen zwei aufeinander folgenden Paketen ab, gehen insbesondere in einen Sleep-Modus, um Energie zu sparen und das Aufwachen für ein nächstes Paket wird unter anderem durch den zeitlichen Korrekturfaktor bestimmt. In einer dritten Ausgestaltung der Erfindung schalten sich der Funkempfänger oder der Funkempfänger und der Funksender in den Pausen des Pakets und zwischen zwei aufeinander folgenden Paketen ab. Durch das Abschalten in den Pausen eines Pakets bzw. zwischen zwei aufeinander folgenden Paketen kann mit Vorteil erreicht werden, dass die Energieeffizienz des Funkempfängers und/oder des Funksender gesteigert wird. Damit ein Aufwachen zum richtigen Zeitpunkt erreicht werden kann, besteht die Möglichkeit den zeitlichen Korrekturfaktor zu verwenden. Somit kann beispielsweise ein möglicher Fehler in der Übertragungszeit bzw. ein Zeitfehler in einfacher Weise kompensiert werden.

Es besteht zweckmäßigerweise die Möglichkeit, dass der Funkempfänger aufgrund der Trägerfrequenz des Funksenders einen Unterschied zwischen dem Sender-Zeitgeber und dem Empfänger-Zeitgeber berechnet und daraus mindestens einen Korrekturfaktor berechnet. Um den Trägerfrequenzfehler zu bestimmen kann beispielsweise die Differenz der Trägerfrequenzen vom Funksender und vom Funkempfänger ermittelt werden.

Vorteilhafterweise kann aufgrund des Unterschieds zwischen dem Sender-Zeitgeber und dem Empfänger-Zeitgeber für jedes Teilpaket eine unterschiedliche Aufwachzeit berechnet werden. In einer zweiten Ausgestaltung wird aufgrund des Unterschieds zwischen dem Sender-Zeitgeber und dem Empfänger-Zeitgeber für jedes Paket eine unterschiedliche Aufwachzeit berechnet. Es besteht die Möglichkeit, dass sich der Korrekturfaktor mit der Zeit verändert, so dass vorteilhafterweise für jedes Teilpaket bzw. jedes Paket eine individuelle Aufwachzeit berechnet werden kann.

Der Sender-Zeitgeber des Funksenders kann zweckmäßigerweise einen Schwingquarz sowie einen Hochfrequenz-Quarz umfassen. Ferner können ein Schwingquarz und ein Hochfrequenz-Quarz in Quarzoszillatoren eingesetzt sein. Beim Schwingquarz kann es sich um einen Niederfrequenz-Quarz handeln, welcher zweckmäßigerweise als Zeitquarz bzw. Uhrenquarz ausgebildet sein kann. Das Verfahren kann damit die Kompensation von Quarztoleranzen ermöglichen. Vorteilhafterweise besteht nicht die Notwendigkeit besondere Anforderungen bezüglich Frequenzgenauigkeit und/oder Stabilität an die eingesetzten Quarze zu stellen. Dadurch wird mit Vorteil erreicht, dass das Verfahren kosteneffizient umgesetzt werden kann.

Im Funksender kann zweckmäßigerweise ein Schwingquarz im Quarzoszillator für die Zeitbasis eingesetzt sein. Der Hochfrequenz-Quarz und der Schwingquarz, insbesondere als Zeitquarz bzw. Uhrenquarz, können abgeglichen werden, indem die Anzahl der Schwingungen bzw. Ticks des Hochfrequnez-Quarzoszillators in einer oder mehreren Zeitperioden des Schwingquarzes gemessen wird. Damit kann ein Zusammenhang zwischen der Abweichung von der nominellen Frequenz und der nominellen zeitlichen Auflösung hergestellt werden. Somit besteht die Möglichkeit, dass die Trägerfrequenz und die Sendezeitpunkte der Daten und/oder die Trägerfrequenz und die Abtastrate der Daten und/oder die Sendezeitpunkte der Daten und die Abtastrate der Daten von demselben Taktgeber abhängen. Hierfür besteht beispielsweise die Möglichkeit einen Hochfrequenz-Quarz zu verwenden, von dem die Werte abgeleitet werden, oder z. B. ein gekoppeltes System aus Hochfrequenz-Quarz und Niederfrequenz-Quarz. Diese Kopplung kann beispielsweise durch eine hardwaretechnische Leitung zwischen den Quarzen realisiert werden oder z. B. durch ein gegenseitiges Messen der Quarze, wobei bei einem Versatz dieser kompensiert wird.

Das Verfahren kann zweckmäßigerweise folgende Verfahrensschritte umfassen:
eine Synchronisationssequenz wird vom Funksender auf einer Trägerfrequenz ausgesendet;
der Funkempfänger sucht in einem definierten Suchfenster nach möglichen Trägersignalen des Funksenders;
der Funkempfänger findet das Trägersignal des Funksenders;
der Funkempfänger ermittelt aus der empfangenen Synchronisationssequenz den Frequenzfehler und/oder den Zeitfehler des Funksenders.

Die vom Funksender ausgesandte Synchronisationssequenz wird vom Funkempfänger beispielsweise durch einen Frequenz-Sweep gesucht. Für den Frequenz-Sweep kann in einem definierten Suchfenster die Frequenz periodisch und/oder stetig in einem vorgegebenen Bereich durchlaufen werden. In einer bestimmten Suchbandbreite kann nach möglichen Trägersignalen des Funksenders gesucht werden. Der Funkempfänger findet das Trägersignal des Funksenders und empfängt damit auch die Synchronisationssequenz. Sofern ein Frequenzversatz zwischen der ausgesandten Trägerfrequenz des Funksenders und der vom Funkempfänger erwarteten Trägerfrequenz besteht, kann beispielsweise der Frequenzfehler zwischen Funksender und Funkempfänger bestimmt werden. Der Frequenzfehler kann somit bereits inhärent kompensiert werden. Ein Zeitfehler zwischen Funksender und Funkempfänger kann beispielsweise dadurch ermittelt werden, dass das Trägersignal des Funksenders den Funkempfänger nicht zum erwarteten Zeitpunkt erreicht.

Der Empfänger-Zeitgeber des Funkempfängers kann zweckmäßigerweise einen Schwingquarz sowie einen Hochfrequenz-Quarz umfassen. Der Schwingquarz kann zweckmäßigerweise als Zeitquarz bzw. Uhrenquarz ausgebildet sein. Das Verfahren kann Quarztoleranzen kompensieren, ohne dass besondere Anforderungen bezüglich Frequenzgenauigkeit und/oder Stabilität an die eingesetzten Quarze zu stellen sind. Dadurch wird mit Vorteil erreicht, dass das Verfahren kosteneffizient umgesetzt werden kann.

Zeitliche Abweichungen zwischen dem Funksender und dem Funkempfänger können sich in unterschiedlichen Abtastraten der beiden Kommunikationspartner niederschlagen. Um diese zeitlichen Abweichungen im Funkempfänger zu berücksichtigen besteht die Möglichkeit, dass ein zweistufiges Kalibrierungsverfahren durchgeführt wird.

Das Verfahren kann einen ersten Kalibrierungsschritt umfassen mit folgendem Verfahrensschritt:
Abgleich des Schwingquarzes des Empfänger-Zeitgebers mit dem Hochfrequenz-Quarz des Empfänger-Zeitgebers während der Hochfrequenz-Quarz aktiviert ist.

Der Hochfrequenz-Quarzoszillator ist beim Funkempfänger beispielsweise nur während des Empfangs bzw. während der Empfangsbereitschaft aktiviert. Der erste Kalibrierungsschritt erfolgt daher während der aktiven Zeit des Hochfrequenz-Quarzoszillators im Funkempfänger, wie beispielsweise während des Empfangs der Synchronisationssequenz des Funksenders. Vorteilhafterweise ist der Hochfrequenz-Quarzoszillator des Funkempfängers beim Empfang ohnehin aktiviert. Dadurch wird mit Vorteil erreicht, dass das Verfahren keine zusätzlichen Anforderungen an den Energiebedarf der Funkempfänger stellt. Das Verfahren kann somit energieeffizient durchgeführt werden. Es besteht ferner die Möglichkeit, dass der Funkempfänger in einer alternativen Ausgestaltung mit bidirektionalen Kommunikationsmitteln ausgestaltet ist. Hierbei kann der Hochfrequenz-Quarzoszillator auch beim Senden des Funkempfängers aktiviert sein, so dass auch ein Abgleich des Schwingquarzes mit dem Hochfrequenz-Quarz beim Senden möglich ist.

Beim Schwingquarz kann es sich zweckmäßigerweise um einen Uhrenquarz bzw. einen Zeitquarz handeln, so dass in der ersten Kalibrierungsstufe ein Abgleich von Uhrenquarz bzw. Zeitquarz und dem Hochfrequenz-Quarz stattfindet. Beispielsweise wird hierfür gezählt, wie viele Perioden des Hochfrequenz-Quarzes während einer Periode des Uhrenquarzes bzw. Zeitquarzes durchlaufen werden. Es besteht damit die Möglichkeit, dass der Schwingquarz, insbesondere als Uhrenquarz bzw. Zeitquarz, dafür verwendet wird, um die grobe zeitliche Rasterung bei der Zeitbestimmung vorzugeben, da bekannt ist, wie viele Perioden des Hochfrequenz-Quarzes einer Periode des Schwingquarzes entsprechen.

Vorteilhafterweise kann für eine Feineinstellung der Zeiteinheiten der Hochfrequenz-Quarz verwendet werden. Bei der Feineinstellung können somit Zeiteinheiten, welche kleiner sind als eine Periode des Schwingquarzes, insbesondere des Uhrenquarzes bzw. Zeitquarzes, durch den Hochfrequenz-Quarz bestimmt und eingestellt werden. Vorteilhafterweise ist der Hochfrequenz-Quarzoszillator ohnehin aktiviert, sofern die Feineinstellung unmittelbar vor einem Empfangsereignis stattfindet.

Zweckmäßigerweise kann der erste Kalibrierungsschritt zusätzlich folgenden Verfahrensschritt umfassen:
Aktivieren des Hochfrequenz-Quarzes des Empfänger-Zeitgebers.

Es besteht zweckmäßigerweise die Möglichkeit, dass der Korrekturfaktor aus mindestens zwei Korrekturfaktoren gebildet wird, wobei sich mindestens ein Korrekturfaktor aus dem Unterschied zwischen dem Sender-Zeitgeber und dem Empfänger-Zeitgeber, insbesondere aus einem Quarzfehler, ergibt sowie mindestens ein Korrekturfaktor aus dem Unterschied zwischen dem Schwingquarz des Empfänger-Zeitgebers und dem Hochfrequenz-Quarz des Empfänger-Zeitgebers. Mit einem Korrekturfaktor kann beispielsweise der Versatz kompensiert werden, der sich aus dem Unterschied zwischen den Taktgebern im Funksender und im Funkempfänger ergibt. Es kann zudem ein weiterer Versatz auftreten, welcher dadurch bedingt ist, dass die Taktgeber bzw. die Uhrenquarze im Funksender und im Funkempfänger über die Zeit, insbesondere über längere Zeit, auseinander laufen. Somit kann sich der Versatz zwischen Funksender und Funkempfänger über die Zeit verändern. Für diese zeitliche Veränderung kann beispielsweise ein weiterer Korrekturfaktor bestimmt werden.

Das Verfahren kann einen zweiten Kalibrierungsschritt umfassen mit folgenden Verfahrensschritten:
Bestimmen des Abtastratenfehlers des Funksenders durch Bestimmen der Abweichung der Trägerfrequenz des Funksenders;
Berechnung eines zeitlichen Korrekturfaktors anhand des Abtastratenfehlers zur Kompensation unterschiedlicher Abtastraten zwischen Funksender und Funkempfänger.

Von der Abweichung der Trägerfrequenz kann auf die Quarzfrequenz des Hochfrequenz-Quarzes des Funksenders geschlossen werden. Wobei durch die Quarzfrequenz des Hochfrequenz-Quarzes des Funksenders weiter der Abtastratenfehler des Funksenders bestimmt werden kann. Dies ist möglich, da im Funksender die Zeit, die Frequenz sowie die Abtastrate vom gleichen Zeitgeber bzw. Taktgeber abgeleitet werden. Zudem können die Pausen zwischen den Paketen sowie die Pausen innerhalb der Pakete vom gleichen Zeitgeber bzw. Taktgeber abgeleitet werden.. Die Abweichung der Trägerfrequenz des Funksenders kann dem Funkempfänger bereits durch den Empfang der Synchronisationssequenz bekannt sein.

Mit Kenntnis des Abtastratenfehlers des Funksenders besteht die Möglichkeit, dass im Funkempfänger ein zeitlicher Korrekturfaktor berechnet wird. Dieser zeitliche Korrekturfaktor gibt eine zeitliche Verschiebung des Empfangsfensters vor, so dass unterschiedliche Abtastraten vom Funksender und vom Funkempfänger im Funkempfänger kompensiert werden.

Zweckmäßigerweise kann es sich bei dem Funkübertragungssystem um ein Schmalbandsystem handeln. Schmalbandige Übertragungskanäle stellen bestimmte Anforderungen an die Genauigkeit der Frequenz und die Genauigkeit der Zeitbestimmung. Das Verfahren kann somit die Möglichkeit bieten, Frequenzfehler und/oder Zeitfehler und/oder Abtastratenfehler zu ermitteln und zu kompensieren, wodurch die Anforderungen eines Schmalbandsystems erfüllt werden können.

Besonders zweckmäßig ist es, wenn es sich bei dem Funkübertragungssystem um ein System mit Frequenzsprungverfahren handelt. Ein mögliches Frequenzsprungverfahren bzw. Frequenzspreizverfahren für die drahtlose Datenübertragung stellt beispielsweise das Frequency Hopping Spread Spectrum (FHSS) dar. Bei einem Frequenzsprungverfahren gibt der im zweiten Kalibrierungsschritt bestimmte zeitliche Korrekturfaktor die zeitliche Verschiebung des Empfangsfensters pro Sprung bzw. "Hop" vor.

In einer möglichen Ausgestaltung kann das Verfahren in einem Funkübertragungssystem mit Splittingverfahren Anwendung finden. Ein mögliches Splittingverfahren ist in der DE 10 2011 082 098 B4 beschrieben.

Zweckmäßigerweise kann es sich beim Funksender um eine Basisstation und beim Funkempfänger um einen Verbrauchszähler handeln. In einer dritten Ausgestaltung der Erfindung handelt es sich bei dem Funksender um eine Basisstation und bei dem Funkempfänger um ein Endgerät. Ferner besteht die Möglichkeit, dass der Funksender als Datensammler ausgestaltet ist. Der Verbrauchszähler ist zudem energieautark. Um einen energieautarken Verbrauchszähler zu realisieren kann dieser beispielsweise batteriebetrieben sein. Es ist damit vorteilhafterweise eine Möglichkeit geschaffen, eine Kompensation von Trägerfrequenzfehlern und/oder einen Abtastratenfehlern und/oder Fehlern in der Übertragungszeit bzw. Zeitfehlern im Verbrauchszähler durchzuführen.

Nebengeordnet beansprucht die vorliegende Erfindung zudem eine Anordnung eines Funkübertragungssystems bestehend aus einem Funksender und mindestens einem Funkempfänger, wobei der Funksender mindestens einen Sender-Zeitgeber mit Zeitmessmitteln zur Bestimmung von Sendezeitpunkten und/oder zur Bestimmung von Trägerfrequenzen und/oder zur Bestimmung von Abtrastraten umfasst, und der Funkempfänger mindestens einen Empfänger-Zeitgeber mit Zeitmessmitteln zur Bestimmung von Sendezeitpunkten und/oder zur Bestimmung von Trägerfrequenzen und/oder zur Bestimmung von Abtrastraten umfasst, wobei kennzeichnenderweise die Anordnung nach mindestens einem der vorhergehenden Verfahrensansprüche betreibbar ist.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte schematische Darstellung eines gattungsgemäßen Funkübertragungssystems;
- Fig. 2: eine stark vereinfachte schematische Darstellung der Übertragung der Synchronisationssequenz;
- Fig. 3: eine stark vereinfachte schematische Darstellung des Abgleichs des Schwingquarzes und des Hochfrequenz-Quarzes;
- Fig. 4: eine stark vereinfachte schematische Darstellung der Bestimmung des Abtastratenfehlers.

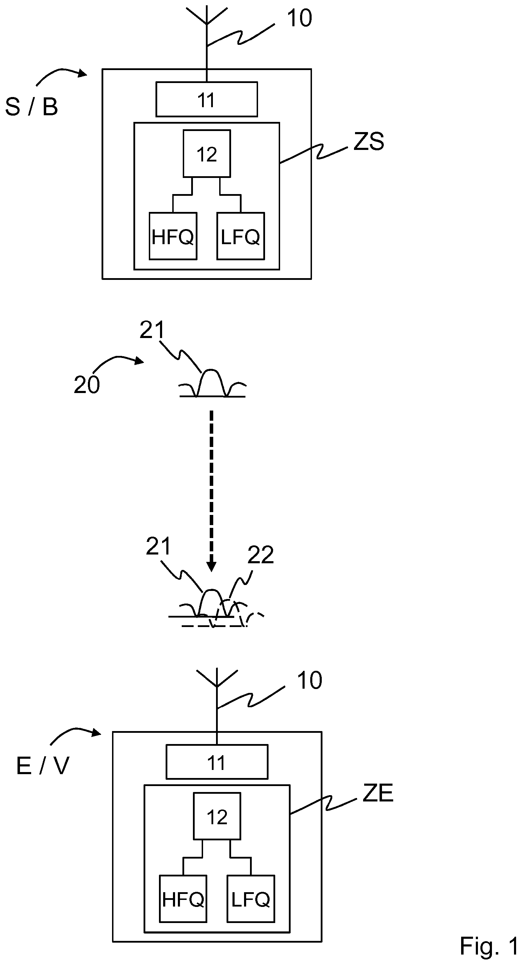

Fig. 1 zeigt eine vereinfachte schematische Darstellung eines gattungsgemäßen Funkübertragungssystems. Das Funkübertragungssystem umfasst einen Funksender bzw. eine Basisstation B sowie einen Funkempfänger bzw. einen Verbrauchszähler V.

Die Basisstation B umfasst einen Sender-Zeitgeber ZS, welcher einen Hochfrequenz-Quarz HFQ, einen Niederfrequenz-Quarz LFQ sowie einen Mikrocontroller 12 umfasst. Der Hochfrequenz-Quarz wird z. B. mit einem Oszillator bei einer Frequenz von 40 MHz betrieben, wobei der Niederfrequenz-Quarz LFQ beispielsweise mit einem Oszillator bei einer Frequenz von 32 kHz betrieben wird. Der Niederfrequenz-Quarz LFQ kann dabei als Uhrenquarz bzw. als Zeitquarz verwendet werden. Der Hochfrequenz-Quarz HFQ sowie der Niederfrequenz-Quarz LFQ sind über einen Mikrocontroller 12 gekoppelt. Zum Abgleich der Quarze aufeinander kann beispielsweise der jeweils andere Quarz gemessen werden. Beispielsweise kann der Niederfrequenz-Quarz LFQ den Hochfrequenz-Quarz HFQ vermessen und einen möglichen Versatz, insbesondere einen zeitlichen Versatz, kompensieren. Die Basisstation B weist zudem ein Kommunikationsmodul 11 sowie eine Antenne 10 für die drahtlose Datenübertragung auf.

Der Verbrauchszähler V umfasst einen Empfänger-Zeitgeber ZE, welcher einen Hochfrequenz-Quarz HFQ, einen Niederfrequenz-Quarz LFQ sowie einen Mikrocontroller 12 umfasst. Der Hochfrequenz-Quarz wird z. B. mit einem Oszillator bei einer Frequenz von 40 MHz betrieben, wobei der Niederfrequenz-Quarz LFQ beispielsweise mit einem Oszillator bei einer Frequenz von 32 kHz betrieben wird. Der Niederfrequenz-Quarz LFQ kann dabei als Uhrenquarz bzw. als Zeitquarz verwendet werden. Der Hochfrequenz-Quarz HFQ sowie der Niederfrequenz-Quarz LFQ sind über einen Mikrocontroller 12 gekoppelt. Zum Abgleich der Quarze aufeinander kann beispielsweise der jeweils andere Quarz gemessen werden. Beispielsweise kann der Niederfrequenz-Quarz LFQ den Hochfrequenz-Quarz HFQ vermessen und einen möglichen Versatz, insbesondere einen zeitlichen Versatz, beispielsweise im Uplink vom Verbrauchszähler V zur Basisstation B, kompensieren. Ferner weist der Verbrauchszähler V ein Kommunikationsmodul 11 sowie eine Antenne 10 für den Empfang einer drahtlosen Datenübertragung auf. Der Verbrauchszähler V ist als Funkempfänger E zudem energieautark.

Weiter zeigt Fig. 1 die Aussendung einer Synchronisationssequenz 20 von der Basisstation B auf einer Trägerfrequenz 21. Der Verbrauchszähler V sucht in einem definierten Suchfenster nach möglichen Trägersignalen auf einer Trägerfrequenz 21 der Basisstation B. Der Verbrauchszähler V findet das Trägersignal auf einer Trägerfrequenz 21. Bei Vorliegen eines Frequenzfehlers zwischen Basisstation B und Verbrauchszähler V stimmt die von der Basisstation B ausgesandte Trägerfrequenz 21 nicht mit der vom Verbrauchszähler V erwarteten Trägerfrequenz 22 überein. Bei dem Funkübertragungssystem in Fig. 1 kann es sich zudem um ein Schmalbandsystem handeln.

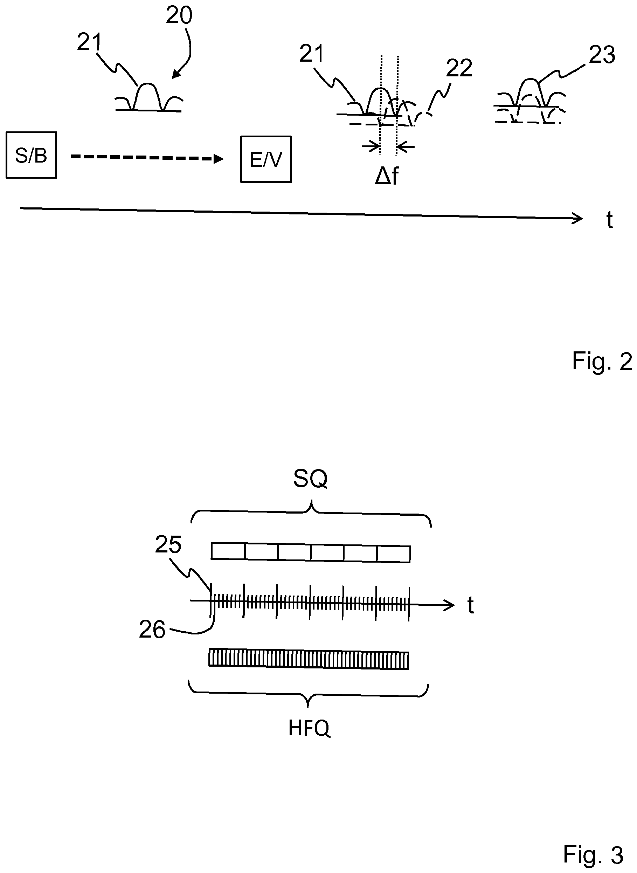

In Fig. 2 ist eine vereinfachte schematische Darstellung der Übertragung der Synchronisationssequenz 20 gezeigt. Zunächst wird die Synchronisationssequenz 20 von der Basisstation B auf einer Trägerfrequenz 21 ausgesendet. Anschließend sucht der Verbrauchszähler V in einem definierten Suchfenster nach möglichen Trägersignalen der Basisstation B. Nachdem der Verbrauchszähler V das Trägersignal auf einer Trägerfrequenz 21 der Basisstation B gefunden hat, vergleicht der Verbrauchszähler V die empfangene Trägerfrequenz 21 mit der erwarteten Trägerfrequenz 22. Dadurch kann der Verbrauchszähler V zwischen der empfangen Trägerfrequenz 21 und der erwarteten Trägerfrequenz 22 den Frequenzversatz bzw. den Frequenzfehler Δf ermitteln. Damit besteht die Möglichkeit den Frequenzfehler Δf zwischen Basisstation B und Verbrauchszähler V im Verbrauchszähler V inhärent zu kompensieren.

Sofern im Verbrauchzähler V die Sendezeitpunkte der Basisstation B bekannt sind, kann durch den Empfangszeitpunkt einer Synchronisationssequenz 20 auf einer bestimmten Trägerfrequenz 21 ein Zeitfehler der Basisstation bezüglich des Verbrauchszählers V im Verbrauchszähler V bestimmt werden.

In Fig. 3 ist eine vereinfachte schematische Darstellung des Abgleichs des Schwingquarzes SQ und des Hochfrequenz-Quarzes HFQ dargestellt. Beim Schwingquarz SQ kann es sich zweckmäßigerweise um einen Niederfrequenz-Quarz LFQ handeln. In einem ersten Kalibrierungsschritt wird der Schwingquarz SQ, insbesondere in der Ausgestaltung als Uhrenquarz bzw. Zeitquarz, des Empfänger-Zeitgebers ZE mit dem Hochfrequenz-Quarz HFQ des Empfänger-Zeitgebers ZE abgeglichen. Für einen Abgleich ist der Hochfrequenz-Quarzoszillator HFQ aktiviert. Dabei kann der Hochfrequenz-Quarzoszillator HFQ zum Zeitpunkt des Abgleichs ohnehin aktiviert sein, da dieser während des Empfangs bzw. während der Empfangsbereitschaft aktiviert ist. Ferner besteht die Möglichkeit den Hochfrequenz-Quarzoszillator HFQ für den Abgleich zu aktivieren. Die Schwingungsperioden des Schwingquarzes SQ sind länger als die Schwingungsperioden des Hochfrequenz-Quarzes HFQ. Für den Abgleich wird gezählt, wie viele Perioden des Hochfrequenz-Quarzes HFQ während einer Periode des Schwingquarzes SQ, insbesondere in der Ausgestaltung als Uhrenquarz bzw. Zeitquarz durchlaufen werden. Durch den Schwingquarz SQ kann somit die grobe zeitliche Rasterung 25 bei der Zeitbestimmung vorgegeben werden. Für die Einteilung des feinen Zeitrasters 26 besteht die Möglichkeit den Hochfrequenz-Quarz HFQ zu verwenden. Damit können in einer Feineinstellung Zeiteinheiten eingeteilt werden, welche kleiner als eine Periode des Schwingquarzes SQ sind. Somit kann die Zeitreferenz des Schwingquarzes SQ und die Hochfrequenzreferenz des Hochfrequenz-Quarzes HFQ aufeinander kalibriert werden.

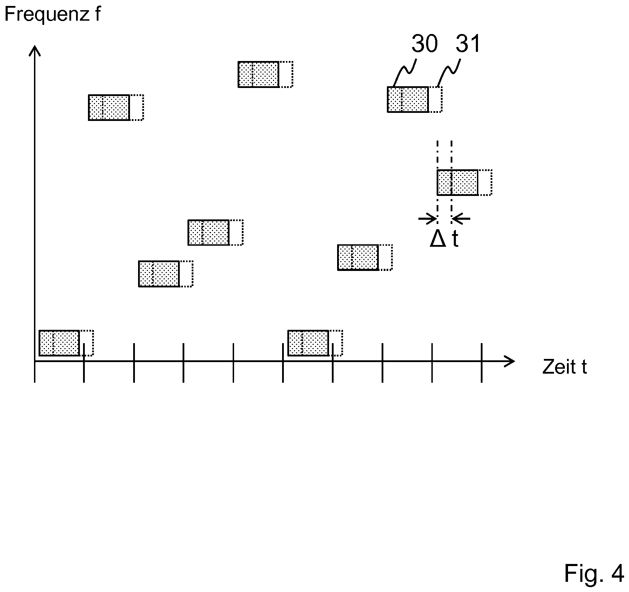

Fig. 4 zeigt eine vereinfachte schematische Darstellung der Bestimmung des Abtastratenfehlers. In einem zweiten Kalibrierungsschritt wird die Abweichung der Trägerfrequenz 21 der Basisstation B von der vom Verbrauchszähler V erwarteten Trägerfrequenz 22 bestimmt. Von der Abweichung der Trägerfrequenz 21 kann der Verbrauchszähler V wiederum auf die Quarzfrequenz des Hochfrequenz-Quarzes HFQ der Basisstation B schließen. Sofern die Quarzfrequenz des Hochfrequenz-Quarzes HFQ im Verbrauchszähler V vorliegt, kann daraus der Abtastratenfehler der Basisstation B im Verbrauchszähler V bestimmt werden. Das Diagramm in Fig. 4 ist für ein Funkübertragungssystem mit Frequenzsprungverfahren aufgetragen. Die Trägerfrequenz 21 wechselt hier frequentiv und diskret, was durch die einzelnen Sprünge bzw. "Hops" dargestellt wird. Die Sequenz der Frequenzwechsel wird beispielsweise durch Pseudozufallszahlen bestimmt. Die Nutzdaten können erst schmalbandig moduliert werden, um dann auf bestimmte Frequenzen hoch gemischt zu werden. Auf der Empfängerseite wird ein Frequenz-Synthesizer dem Empfangsmodulator vorgeschalten, welcher die Spreizung rückgängig macht und anschließend konventionell demoduliert. Sofern die Abtastrate 30 der Basisstation B nicht mit der Abtastrate 31 des Verbrauchszählers V übereinstimmt, kommt es zu einem Abtastratenfehler Δt. Durch den Abtastratenfehler Δt kann es zu Fehlern in der Signalverarbeitung kommen. Beispielsweise besteht die Möglichkeit, dass Symbole innerhalb eines Sprunges bzw. Hops im Trägersignal der Basisstation B im Verbrauchszähler V nicht korrekt abgetastet werden können. Die Abtastung im Verbrauchszähler V kann beispielsweise auf einem Frequenzsprung bzw. Frequenzhop zeitlich zu früh stattfinden, was dazu führt, dass die letzten gesendeten Symbole auf dieser Frequenz bzw. diesem Frequenzsprung nicht mehr abgetastet werden. Dasselbe gilt dann, wenn die Abtastung zeitlich zu spät stattfindet, so dass die Symbole am Anfang eines Frequenzsprungs bzw. Frequenzhops nicht abgetastet werden. Um diese fehlerhafte Abtastung zu korrigieren bzw. zu kompensieren, wird ein zeitlicher Korrekturfaktor im Verbrauchszähler V berechnet. Für die Berechnung wird der Abtastratenfehler Δt zwischen der Abtastrate 30 der Basisstation B und der Abtastrate 31 des Verbrauchszählers V verwendet. Durch den zeitlichen Korrekturfaktor wird sichergestellt, dass Anfang und Ende der Abtastung eines Frequenzsprungs bzw. Frequenzhops des Verbrauchszähler V und der Basisstation B aufeinander fallen. Dadurch kann der Funkempfänger E auch in der Frequenz verschoben aufwachen, um die vom Funksender S ausgesendeten Pakete genau zu treffen.

### BEZUGSZEICHENLISTE

- B: Basisstation
- V: Verbrauchszähler
- S: Funksender
- E: Funkempfänger

- ZS: Sender-Zeitgeber
- ZE: Empfänger-Zeitgeber
- SQ: Schwingquarz
- LFQ: Niederfrequenz-Quarz
- HFQ: Hochfrequenz-Quarz

- 10: Antenne
- 11: Kommunikationsmodul
- 12: Mikrocontroller

- 20: Synchronisationssequenz
- 21: vom Funksender gesendete Trägerfrequenz
- 22: vom Funkempfänger erwartete Trägerfrequenz
- 23: Trägerfrequenz mit zeitlichem Korrekturfaktor

- Δf: Frequenzfehler

- 25: grobes Zeitraster
- 26: feines Zeitraster

- 30: Abtastrate des Funksenders
- 31: Abtastrate des Funkempfängers

- Δt: Abtastratenfehler

## Patentansprüche

1. Verfahren zum Betrieb eines Funkübertragungssystems mit einem Funksender (S) und mindestens einem Funkempfänger (E), wobei
der Funksender (S)
mindestens einen Sender-Zeitgeber (ZS), insbesondere einen Taktgeber, umfasst, und
zur Übertragung von Daten ein Teilpaket sendet, wobei
die Trägerfrequenz und die Sendezeitpunkte der Daten oder
die Trägerfrequenz und die Abtastrate der Daten vom Sender-Zeitgeber (ZS), insbesondere von einem Taktgeber, abhängen, und
der Funkempfänger (E)
mindestens einen Empfänger-Zeitgeber (ZE), insbesondere einen Taktgeber, mit Zeitmessmitteln zur Bestimmung von Sendezeitpunkten oder zur Bestimmung von Trägerfrequenzen oder zur Bestimmung von vom Sender-Zeitgeber abhängige Abtrastraten umfasst, wobei
der Funkempfänger (E) aufgrund der empfangenen Daten einen Trägerfrequenzfehler oder einen Abtastratenfehler oder einen Fehler im Sendezeitpunkt abschätzt und daraus einen Zeitfehler ermittelt, wobei auf Basis des Zeitfehlers ein zeitlicher Korrekturfaktor zur Kompensation bestimmt wird,
wobei
der Funksender (S) ein Paket zerstückelt als Teilpakete sendet, indem mindestens zwei Pausen innerhalb des Pakets eingelegt werden, wobei die Pausen aus demselben Sender-Zeitgeber (ZS) generiert werden, aus dem die Trägerfrequenz generiert wird, wobei vorgesehen ist, dass sich der Funkempfänger (E) oder der Funkempfänger (E) und der Funksender (S) in den Pausen des Pakets in einen Sleep-Modus gehen, um Energie zu sparen und das Aufwachen unter anderem durch den zeitlichen Korrekturfaktor bestimmt wird.

2. Verfahren zum Betrieb eines Funkübertragungssystems mit einem Funksender (S) und mindestens einem Funkempfänger (E), wobei
der Funksender (S)
mindestens einen Sender-Zeitgeber (ZS), insbesondere einen Taktgeber, umfasst, und
zur Übertragung von Daten ein Paket oder eine Mehrzahl an Paketen nacheinander sendet, wobei
die Trägerfrequenz und die Sendezeitpunkte der Daten oder
die Trägerfrequenz und die Abtastrate der Daten vom Sender-Zeitgeber (ZS), insbesondere von einem Taktgeber, abhängen, und
der Funkempfänger (E)
mindestens einen Empfänger-Zeitgeber (ZE), insbesondere einen Taktgeber, mit Zeitmessmitteln zur Bestimmung von Sendezeitpunkten oder zur Bestimmung von Trägerfrequenzen oder zur Bestimmung von vom Sender-Zeitgeber abhängige Abtrastraten umfasst, wobei
der Funkempfänger (E) aufgrund der empfangenen Daten einen Trägerfrequenzfehler oder einen Abtastratenfehler oder einen Fehler im Sendezeitpunkt abschätzt und daraus einen Zeitfehler ermittelt, wobei auf Basis des Zeitfehlers ein zeitlicher Korrekturfaktor zur Kompensation bestimmt wird, wobei der Funkempfänger (E) aufgrund der Trägerfrequenz des Funksenders (S) einen Unterschied zwischen dem Sender-Zeitgeber (ZS) und dem Empfänger-Zeitgeber (ZE) berechnet und daraus mindestens einen Korrekturfaktor berechnet,
wobei
sich der Funkempfänger (E) oder der Funkempfänger (E) und der Funksender (S) zwischen zwei aufeinander folgenden Paketen in einen Sleep-Modus gehen, um Energie zu sparen und das Aufwachen für ein nächstes Paket unter anderem durch den zeitlichen Korrekturfaktor bestimmt wird, wobei
aufgrund des Unterschieds zwischen dem Sender-Zeitgeber (ZS) und dem Empfänger-Zeitgeber (ZE) für jedes Paket eine unterschiedliche Aufwachzeit berechnet wird.

3. Verfahren zum Betrieb eines Funkübertragungssystems mit einem Funksender (S) und mindestens einem Funkempfänger (E), wobei
der Funksender (S) eine Basisstation (B) ist, sowie
mindestens einen Sender-Zeitgeber (ZS), insbesondere einen Taktgeber, umfasst, und
zur Übertragung von Daten ein Paket oder eine Mehrzahl an Paketen nacheinander sendet, wobei die Pakete aus Teilpaketen bestehen, wobei
die Trägerfrequenz und die Sendezeitpunkte der Daten vom Sender-Zeitgeber (ZS), insbesondere von einem Taktgeber, abhängen, und
der Funkempfänger (E) ein Endgerät ist, sowie
mindestens einen Empfänger-Zeitgeber (ZE), insbesondere einen Taktgeber, mit Zeitmessmitteln zur Bestimmung von Sendezeitpunkten oder zur Bestimmung von Trägerfrequenzen oder zur Bestimmung von vom Sender-Zeitgeber abhängige Abtrastraten oder zur Bestimmung von Quarzfrequenzen umfasst,
wobei
der Funkempfänger (E) aufgrund der empfangenen Daten einen Trägerfrequenzfehler oder einen Abtastratenfehler oder einen Fehler im Sendezeitpunkt oder eine Quarztoleranz abschätzt und daraus einen Zeitfehler ermittelt, wobei auf Basis des Zeitfehlers ein zeitlicher Korrekturfaktor zur Kompensation von Trägerfrequenzfehlern oder von vom Sender-Zeitgeber abhängige Abtastratenfehlern oder von Fehlern im Sendezeitpunkt oder von Quarztoleranzen bestimmt wird, wobei
der Funksender (S) ein Paket zerstückelt als Teilpakete sendet, indem mindestens zwei Pausen innerhalb des Pakets eingelegt werden, wobei die Pausen aus demselben Sender-Zeitgeber (ZS) generiert werden, aus dem die Trägerfrequenz generiert wird, und wobei
sich der Funkempfänger (E) oder der Funkempfänger (E) und der Funksender (S) in den Pausen eines Pakets oder zwischen zwei aufeinander folgenden Paketen in einen Sleep-Modus gehen, um Energie zu sparen und das Aufwachen für ein nächstes Paket unter anderem durch den zeitlichen Korrekturfaktor bestimmt wird.

4. Verfahren nach Anspruch 1 oder 3, **dadurch gekennzeichnet, dass**
der Funkempfänger (E) aufgrund der Trägerfrequenz des Funksenders (S) einen Unterschied zwischen dem Sender-Zeitgeber (ZS) und dem Empfänger-Zeitgeber (ZE) berechnet und daraus mindestens einen Korrekturfaktor berechnet.

5. Verfahren nach Anspruch 1 oder 3 und 4, **dadurch gekennzeichnet, dass**
aufgrund des Unterschieds zwischen dem Sender-Zeitgeber (ZS) und dem Empfänger-Zeitgeber (ZE) für jedes Teilpaket eine unterschiedliche Aufwachzeit berechnet wird.

6. Verfahren nach Anspruch 3 und 4, **dadurch gekennzeichnet, dass**
aufgrund des Unterschieds zwischen dem Sender-Zeitgeber (ZS) und dem Empfänger-Zeitgeber (ZE) für jedes Paket eine unterschiedliche Aufwachzeit berechnet wird.

7. Verfahren nach einem der vorhergehenden Ansprüche, **dadurch gekennzeichnet, dass** der Sender-Zeitgeber (ZS) einen Schwingquarz (SQ) sowie einen Hochfrequenz-Quarz (HFQ) umfasst, wobei insbesondere vorgesehen ist, dass der Schwingquarz (SQ) vom Hochfrequenz-Quarz (HFQ) abgeleitet ist.

8. Verfahren nach einem der vorhergehenden Ansprüche, **dadurch gekennzeichnet, dass**
eine Synchronisationssequenz (20) vom Funksender (S) auf einer Trägerfrequenz (21) ausgesendet wird;
der Funkempfänger (E) in einem definierten Suchfenster nach möglichen Trägersignalen des Funksenders (S) sucht;
der Funkempfänger (E) das Trägersignal des Funksenders (S) findet;
der Funkempfänger (E) aus der empfangenen Synchronisationssequenz (20) den Frequenzfehler und/oder den Zeitfehler des Funksenders (S) ermittelt.

9. Verfahren nach einem der vorhergehenden Ansprüche, **dadurch gekennzeichnet, dass** der Empfänger-Zeitgeber (ZE) einen Schwingquarz (SQ) sowie einen Hochfrequenz-Quarz (HFQ) umfasst.

10. Verfahren nach Anspruch 8 und 9, **dadurch gekennzeichnet, dass** ein erster Kalibrierungsschritt folgenden Verfahrensschritt umfasst:
Abgleich des Schwingquarzes (SQ) des Empfänger-Zeitgebers (ZE) mit dem Hochfrequenz-Quarz (HFQ) des Empfänger-Zeitgebers (ZE) während der Hochfrequenz-Quarz (HFQ) aktiviert ist, wobei insbesondere vorgesehen ist, **dass** für eine Feineinstellung der Zeiteinheiten der Hochfrequenz-Quarz (HFQ) verwendet wird.

11. Verfahren nach Anspruch 10, **dadurch gekennzeichnet, dass** der erste Kalibrierungsschritt zusätzlich folgenden Verfahrensschritt umfasst:
Aktivieren des Hochfrequenz-Quarzes (HFQ) des Empfänger-Zeitgebers (ZE).

12. Verfahren nach einem der vorhergehenden Ansprüche, **dadurch gekennzeichnet, dass**
der Korrekturfaktor aus mindestens zwei Korrekturfaktoren gebildet wird, wobei sich mindestens ein Korrekturfaktor aus dem Unterschied zwischen dem Sender-Zeitgeber (ZS) und dem Empfänger-Zeitgeber (ZE), insbesondere aus einem Quarzfehler, ergibt sowie mindestens ein Korrekturfaktor aus dem Unterschied zwischen dem Schwingquarz (SQ) des Empfänger-Zeitgebers (ZE) und dem Hochfrequenz-Quarz (HFQ) des Empfänger-Zeitgebers (ZE).

13. Verfahren nach einem der Ansprüche 10 bis 12, **dadurch gekennzeichnet, dass** ein zweiter Kalibrierungsschritt folgende Verfahrensschritte umfasst:
Bestimmen des Abtastratenfehlers des Funksenders (S) durch Bestimmen der Abweichung der Trägerfrequenz (21) des Funksenders (S);
Berechnung eines zeitlichen Korrekturfaktors anhand des Abtastratenfehlers zur Kompensation unterschiedlicher Abtastraten zwischen Funksender (S) und Funkempfänger (E).

14. Verfahren nach einem der vorhergehenden Ansprüche, **dadurch gekennzeichnet, dass** es sich bei dem Funkübertragungssystem um ein Schmalbandsystem und/oder um ein System mit Frequenzsprungverfahren handelt.

15. Verfahren nach einem der vorhergehenden Ansprüche, **dadurch gekennzeichnet, dass** der Funksender (S) eine Basisstation (B) und der Funkempfänger (E) ein Verbrauchszähler (V) ist.

16. Anordnung eines Funkübertragungssystems bestehend aus einem Funksender (S) und mindestens einem Funkempfänger (E), wobei
der Funksender (S)
mindestens einen Sender-Zeitgeber (ZS), insbesondere einen Taktgeber, umfasst, und
der Funkempfänger (E)
mindestens einen Empfänger-Zeitgeber (ZE) mit Zeitmessmitteln zur Bestimmung von Sendezeitpunkten und/oder zur Bestimmung von Trägerfrequenzen und/oder zur Bestimmung von vom Sender-Zeitgeber abhängige Abtrastraten umfasst,
**dadurch gekennzeichnet, dass**
die Anordnung nach mindestens einem der vorhergehenden Verfahrensansprüche betreibbar ist.

## Claims

1. Method for operating a radio transmission system with a radio transmitter (S) and at least one radio receiver (E), wherein
the radio transmitter (S)
comprises at least one transmitter timer (ZS), in particular a clock generator, and
transmits a subpacket for the transmission of data, wherein
the carrier frequency and the transmission times of the data or
the carrier frequency and the sampling rate of the data depend on the transmitter timer (ZS), in particular on a clock generator, and
the radio receiver (E)
comprises at least one receiver timer (ZE), in particular a clock generator, with time-measuring means to define transmission times or to define carrier frequencies or to define sampling rates that depend on the transmitter timer, wherein
the radio receiver (E) estimates a carrier frequency error or a sampling rate error or an error in the transmission time on the basis of the received data and determines a time error therefrom, wherein a temporal correction factor for compensation is defined on the basis of the time error,
wherein
the radio transmitter (S) transmits a packet in fragmented form as subpackets by inserting at least two pauses within the packet, wherein the pauses are generated from the same transmitter timer (ZS) as the one from which the carrier frequency is generated, wherein there is provision for the radio receiver (E) or the radio receiver (E) and the radio transmitter (S) to enter a sleep mode in the pauses of the packet, in order to save energy, and for the wake-up to be defined, inter alia, by the temporal correction factor.

2. Method for operating a radio transmission system with a radio transmitter (S) and at least one radio receiver (E), wherein
the radio transmitter (S)
comprises at least one transmitter timer (ZS), in particular a clock generator, and
transmits a packet or a plurality of packets in succession for the transmission of data, wherein
the carrier frequency and the transmission times of the data or
the carrier frequency and the sampling rate of the data depend on the transmitter timer (ZS), in particular on a clock generator, and
the radio receiver (E)
comprises at least one receiver timer (ZE), in particular a clock generator, with time-measuring means to define transmission times or to define carrier frequencies or to define sampling rates that depend on the transmitter timer, wherein
the radio receiver (E) estimates a carrier frequency error or a sampling rate error or an error in the transmission time on the basis of the received data and determines a time error therefrom, wherein a temporal correction factor for compensation is defined on the basis of the time error, wherein the radio receiver (E) calculates a difference between the transmitter timer (ZS) and the receiver timer (ZE) on the basis of the carrier frequency of the radio transmitter (S) and calculates at least one correction factor therefrom,
wherein
the radio receiver (E) or the radio receiver (E) and the radio transmitter (S) enter a sleep mode between two successive packets, in order to save energy, and the wake-up for the next packet is defined, inter alia, by the temporal correction factor, wherein a different wake-up time is calculated for each packet on the basis of the difference between the transmitter timer (ZS) and the receiver timer (ZE).

3. Method for operating a radio transmission system with a radio transmitter (S) and at least one radio receiver (E), wherein
the radio transmitter (S) is a base station (B), and
comprises at least one transmitter timer (ZS), in particular a clock generator, and
transmits a packet or a plurality of packets in succession for the transmission of data, the packets consisting of subpackets, wherein
the carrier frequency and the transmission times of the data depend on the transmitter timer (ZS), in particular on a clock generator, and
the radio receiver (E) is a terminal, and
comprises at least one receiver timer (ZE), in particular a clock generator, with time-measuring means to define transmission times or to define carrier frequencies or to define sampling rates that depend on the transmitter timer or to define crystal frequencies,
wherein
the radio receiver (E) estimates a carrier frequency error or a sampling rate error or an error in the transmission time or a crystal tolerance on the basis of the received data and determines a time error therefrom, wherein a temporal correction factor to compensate for carrier frequency errors or for sampling rate errors that depend on the transmitter timer or for errors in the transmission time or for crystal tolerances is defined on the basis of the time error, wherein
the radio transmitter (S) transmits a packet in fragmented form as subpackets by inserting at least two pauses within the packet, wherein the pauses are generated from the same transmitter timer (ZS) as the one from which the carrier frequency is generated, and wherein
the radio receiver (E) or the radio receiver (E) and the radio transmitter (S) enter a sleep mode in the pauses of a packet or between two successive packets, in order to save energy, and the wake-up for the next packet is defined, inter alia, by the temporal correction factor.

4. Method according to Claim 1 or 3, **characterized in that**
the radio receiver (E) calculates a difference between the transmitter timer (ZS) and the receiver timer (ZE) on the basis of the carrier frequency of the radio transmitter (S) and calculates at least one correction factor therefrom.

5. Method according to Claim 1 or 3 and 4, **characterized in that**
a different wake-up time is calculated for each subpacket on the basis of the difference between the transmitter timer (ZS) and the receiver timer (ZE).

6. Method according to Claims 3 and 4, **characterized in that**
a different wake-up time is calculated for each packet on the basis of the difference between the transmitter timer (ZS) and the receiver timer (ZE).

7. Method according to one of the preceding claims, **characterized in that** the transmitter timer (ZS) comprises an oscillating crystal (SQ) and a high-frequency crystal (HFQ), there being provision in particular for the oscillating crystal (SQ) to be derived from the high-frequency crystal (HFQ).

8. Method according to one of the preceding claims, **characterized in that**
a synchronization sequence (20) is transmitted by the radio transmitter (S) on a carrier frequency (21) ;
the radio receiver (E) searches in a defined search window for possible carrier signals of the radio transmitter (S);
the radio receiver (E) finds the carrier signal of the radio transmitter (S);
the radio receiver (E) determines the frequency error and/or the time error of the radio transmitter (S) from the received synchronization sequence (20).

9. Method according to one of the preceding claims, **characterized in that** the receiver timer (ZE) comprises an oscillating crystal (SQ) and a high-frequency crystal (HFQ).

10. Method according to Claims 8 and 9, **characterized in that** a first calibration step comprises the following method step:
tuning the oscillating crystal (SQ) of the receiver timer (ZE) to the high-frequency crystal (HFQ) of the receiver timer (ZE) while the high-frequency crystal (HFQ) is activated, there being provision in particular for the high-frequency crystal (HFQ) to be used for fine-tuning the time units.

11. Method according to Claim 10, **characterized in that** the first calibration step additionally comprises the following method step:
activating the high-frequency crystal (HFQ) of the receiver timer (ZE).

12. Method according to one of the preceding claims, **characterized in that**
the correction factor is formed from at least two correction factors, wherein at least one correction factor is obtained from the difference between the transmitter timer (ZS) and the receiver timer (ZE), in particular from a crystal error, and at least one correction factor is obtained from the difference between the oscillating crystal (SQ) of the receiver timer (ZE) and the high-frequency crystal (HFQ) of the receiver timer (ZE).

13. Method according to one of Claims 10 to 12, **characterized in that** a second calibration step comprises the following method steps:
defining the sampling rate error of the radio transmitter (S) by defining the deviation of the carrier frequency (21) of the radio transmitter (S);
calculating a temporal correction factor on the basis of the sampling rate error to compensate for different sampling rates between the radio transmitter (S) and the radio receiver (E).

14. Method according to one of the preceding claims, **characterized in that** the radio transmission system is a narrowband system and/or a system using a frequency hopping method.

15. Method according to at least one of the preceding claims, **characterized in that** the radio transmitter (S) is a base station (B) and the radio receiver (E) is a consumption meter (V).

16. Arrangement of a radio transmission system consisting of a radio transmitter (S) and at least one radio receiver (E), wherein
the radio transmitter (S)
comprises at least one transmitter timer (ZS), in particular a clock generator, and
the radio receiver (E)
comprises at least one receiver timer (ZE) with time-measuring means to define transmission times and/or to define carrier frequencies and/or to define sampling rates that depend on the transmitter timer,
**characterized in that**
the arrangement is operable according to at least one of the preceding method claims.

## Revendications

1. Procédé permettant de faire fonctionner un système de transmission radio comprenant un émetteur radio (S) et au moins un récepteur radio (E), dans lequel
l'émetteur radio (S)
comprend au moins un générateur de rythme d'émetteur (ZS), en particulier une horloge, et
émet un paquet partiel pour la transmission de données, dans lequel
la fréquence porteuse et les instants d'émission des données, ou
la fréquence porteuse et le taux d'échantillonnage dépendent des données du générateur de rythme d'émetteur (ZS), en particulier d'une horloge, et
le récepteur radio (E)
comprend au moins un générateur de rythme de récepteur (ZE), en particulier une horloge, pourvu de moyens de mesure de temps pour déterminer des instants d'émission ou pour déterminer des fréquences porteuses ou pour déterminer des taux d'échantillonnage dépendant du générateur de rythme d'émetteur, dans lequel
le récepteur radio (E) estime, en raison des données reçues, une erreur de fréquence porteuse ou une erreur de taux d'échantillonnage ou une erreur au niveau de l'instant d'émission et établit une erreur de temps à partir de ces éléments, un facteur de correction de temps pour la compensation étant déterminé sur la base de l'erreur de temps,
dans lequel l'émetteur radio (S) émet un paquet découpé en paquets partiels en ce qu'au moins deux pauses sont insérées à l'intérieur du paquet, dans lequel les pauses sont générées par le même générateur de rythme d'émetteur (ZS) qui génère la fréquence porteuse, dans lequel il est prévu que le récepteur radio (E) ou le récepteur radio (E) et l'émetteur radio (S) passent en mode veille pendant les pauses du paquet pour économiser l'énergie, et le réveil est déterminé entre autres par le facteur de correction de temps.

2. Procédé permettant de faire fonctionner un système de transmission radio comprenant un émetteur radio (S) et au moins un récepteur radio (E), dans lequel
l'émetteur radio (S)
comprend au moins un générateur de rythme d'émetteur (ZS), en particulier une horloge, et
émet un paquet ou une pluralité de paquets les uns après les autres pour la transmission de données, dans lequel
la fréquence porteuse et les instants d'émission des données, ou
la fréquence porteuse et le taux d'échantillonnage dépendent des données du générateur de rythme d'émetteur (ZS), en particulier d'une horloge, et
le récepteur radio (E)
comprend au moins un générateur de rythme de récepteur (ZE), en particulier une horloge, pourvu de moyens de mesure de temps pour déterminer des instants d'émission ou pour déterminer des fréquences porteuses ou pour déterminer des taux d'échantillonnage dépendant du générateur de rythme d'émetteur, dans lequel
le récepteur radio (E) estime, en raison des données reçues, une erreur de fréquence porteuse ou une erreur d'échantillonnage ou une erreur au niveau de l'instant d'émission et établit une erreur de temps à partir de ces éléments, dans lequel, sur la base de l'erreur de temps, un facteur de correction de temps pour la compensation est déterminé, dans lequel le récepteur radio (E) calcule, en raison de la fréquence porteuse de l'émetteur radio (S), une différence entre le générateur de rythme d'émetteur (ZS) et le générateur de rythme de récepteur (ZE) et calcule au moins un facteur de correction à partir de ces éléments,
dans lequel le récepteur radio (E) ou le récepteur radio (E) et l'émetteur radio (S) passent entre deux paquets consécutifs en mode veille pour économiser de l'énergie, et le réveil pour un paquet suivant est déterminé entre autres par le facteur de correction de temps, dans lequel
en raison de la différence entre le générateur de rythme d'émetteur (ZS) et le générateur de rythme de récepteur (ZE), un temps de réveil différent est calculé pour chaque paquet.

3. Procédé permettant de faire fonctionner un système de transmission radio comprenant un émetteur radio (S) et au moins un récepteur radio (E), dans lequel
l'émetteur radio (S) est une station de base (B), et
comprend au moins un générateur de rythme d'émetteur (ZS), en particulier une horloge, et
émet un paquet ou une pluralité de paquets les uns après les autres pour la transmission de données, les paquets étant composés de paquets partiels, dans lequel
la fréquence porteuse et les instants d'émission dépendent des données du générateur de rythme d'émetteur (ZS), en particulier d'une horloge, et
le récepteur radio (E) est un terminal, et
comprend au moins un générateur de rythme de récepteur (ZE), en particulier une horloge, pourvu de moyens de mesure de temps pour déterminer des instants d'émission ou pour déterminer des fréquences porteuses ou pour déterminer des taux d'échantillonnage dépendant du générateur de rythme d'émetteur ou pour déterminer des fréquences de quartz, dans lequel
le récepteur radio (E) estime, en raison des données reçues, une erreur de fréquence porteuse ou une erreur de taux d'échantillonnage ou une erreur au niveau de l'instant d'émission ou une tolérance de quartz et établit une erreur de temps à partir de ces éléments, dans lequel, sur la base de l'erreur de temps, un facteur de correction de temps pour la compensation des erreurs de fréquence porteuse ou des erreurs d'échantillonnage dépendant du générateur de rythme d'émetteur ou des erreurs au niveau de l'instant d'émission ou des tolérances de quartz est déterminé, dans lequel
l'émetteur radio (S) émet un paquet découpé sous forme de paquets partiels en ce qu'au moins deux pauses sont insérées à l'intérieur du paquet, les pauses étant générées par le même générateur de rythme d'émetteur (ZS) qui génère la fréquence porteuse, et dans lequel
le récepteur radio (E) ou le récepteur radio (E) et l'émetteur radio (S) passent en mode veille dans les pauses d'un paquet ou entre deux paquets consécutifs pour économiser de l'énergie, et le réveil pour un paquet suivant est déterminé entre autres par le facteur de correction de temps.

4. Procédé selon la revendication 1 ou 3, **caractérisé en ce que** le récepteur radio (E) calcule, en raison des fréquences porteuses de l'émetteur radio (S), une différence entre le générateur de rythme d'émetteur (ZS) et le générateur de rythme de récepteur (ZE) et calcule un facteur de correction à partir de ces éléments.

5. Procédé selon les revendications 1 ou 3 et 4, **caractérisé en ce qu'**en raison de la différence entre le générateur de rythme d'émetteur (ZS) et le générateur de rythme de récepteur (ZE), un temps de réveil différent est calculé pour chaque paquet partiel.

6. Procédé selon la revendication 3 et 4, **caractérisé en ce qu'**en raison de la différence entre le générateur de rythme d'émetteur (ZS) et le générateur de rythme de récepteur (ZE), un temps de réveil différent est calculé pour chaque paquet.

7. Procédé selon l'une quelconque des revendications précédentes, **caractérisé en ce que** le générateur de rythme d'émetteur (ZS) comprend un quartz piézoélectrique (SQ) ainsi qu'un quartz haute fréquence (HFQ), dans lequel il est prévu en particulier que le quartz piézoélectrique (SQ) soit dérivé du quartz haute fréquence (HFQ).

8. Procédé selon l'une quelconque des revendications précédentes, **caractérisé en ce que**
une séquence de synchronisation (20) est émise par l'émetteur radio (S) sur une fréquence porteuse (21) ;
le récepteur radio (E) cherche dans une fenêtre de recherche définie des signaux de porteuse possibles de l'émetteur radio (S) ;
le récepteur radio (E) trouve le signal de porteuse de l'émetteur radio (S) ;
le récepteur radio (E) établit l'erreur de fréquence et/ou l'erreur de temps de l'émetteur radio (S) à partir de la séquence de synchronisation reçue (20) .

9. Procédé selon l'une quelconque des revendications précédentes, **caractérisé en ce que** le générateur de rythme de récepteur (ZE) comprend un quartz piézoélectrique (SQ) ainsi qu'un quartz haute fréquence (HFQ).

10. Procédé selon la revendication 8 et 9, **caractérisé en ce qu'**une première étape de calibrage comprend l'étape de procédé suivante :
aligner le quartz piézoélectrique (SQ) du générateur de rythme de récepteur (ZE) sur le quartz haute fréquence (HFQ) du générateur de rythme de récepteur (ZE) pendant que le quartz haute fréquence (HFQ) est activé, dans lequel il est prévu en particulier que le quartz haute fréquence (HFQ) soit utilisé pour un ajustement précis des unités de temps.

11. Procédé selon la revendication 10, **caractérisé en ce que** la première étape de calibrage comprend en outre l'étape de procédé suivante :
activer le quartz haute fréquence (HFQ) du générateur de rythme de récepteur (ZE).

12. Procédé selon l'une quelconque des revendications précédentes, **caractérisé en ce que** le facteur de correction est formé à partir d'au moins deux facteurs de correction, dans lequel au moins un facteur de correction résulte de la différence entre le générateur de rythme d'émetteur (ZS) et le générateur de rythme de récepteur (ZE), en particulier d'une erreur de quartz, et au moins un facteur de correction résulte de la différence entre le quartz piézoélectrique (SQ) du générateur de rythme de récepteur (ZE) et le quartz haute fréquence (HFQ) du générateur de rythme de récepteur (ZE).

13. Procédé selon l'une quelconque des revendications 10 à 12, **caractérisé en ce qu'**une deuxième étape de calibrage comprend les étapes de procédé suivantes :
déterminer l'erreur de taux d'échantillonnage de l'émetteur radio (S) en déterminant l'écart de la fréquence porteuse (21) de l'émetteur radio (S) ;
calculer un facteur de correction de temps à l'aide de l'erreur de taux d'échantillonnage pour compenser différents taux d'échantillonnage entre l'émetteur radio (S) et le récepteur radio (E).

14. Procédé selon l'une quelconque des revendications précédentes, **caractérisé en ce que** le système de transmission radio est un système à bande étroite et/ou un système à procédé de saut de fréquence.

15. Procédé selon l'une quelconque des revendications précédentes, **caractérisé en ce que** l'émetteur radio (S) est une station de base (B) et le récepteur radio (E) est un compteur de consommation (V).

16. Agencement d'un système de transmission radio composé d'un émetteur radio (S) et d'au moins un récepteur radio (E), dans lequel
l'émetteur radio (S)
comprend au moins un générateur de rythme d'émetteur (ZS), en particulier une horloge, et
le récepteur radio (E)
comprend au moins un générateur de rythme de récepteur (ZE) pourvu de moyens de mesure de temps pour déterminer des instants d'émission et/ou pour déterminer des fréquences porteuses et/ou pour déterminer des taux d'échantillonnage dépendant du générateur de rythme d'émetteur,
**caractérisé en ce que** l'agencement peut fonctionner selon au moins l'une des revendications de procédé précédentes.
